**Europäisches Patentamt**

**European Patent Office**

**Office européen des brevets**

(19)

(11) Veröffentlichungsnummer: **0 237 718 B1**

(12) **EUROPÄISCHE PATENTSCHRIFT**

(45) Veröffentlichungstag der Patentschrift:
**22.08.90**

(51) Int. Cl.⁵: **F16C 3/20**, F16C 3/14

(21) Anmeldenummer: **87100665.6**

(22) Anmeldetag: **20.01.87**

(54) **Kurbelwelle für Hubkolbenmaschinen.**

(30) Priorität: **15.03.86 DE 3608810**

(43) Veröffentlichungstag der Anmeldung:
**23.09.87 Patentblatt 87/39**

(45) Bekanntmachung des Hinweises auf die Patenterteilung:
**22.08.90 Patentblatt 90/34**

(84) Benannte Vertragsstaaten:
**DE FR GB IT SE**

(56) Entgegenhaltungen:
**DE-U- 7 520 439**
**GB-A- 176 583**
**US-A- 3 088 783**
**US-A- 4 262 548**

(73) Patentinhaber: **Dr.Ing.h.c. F. Porsche Aktiengesellschaft, Porschestrasse 42, D-7000 Stuttgart 40(DE)**

(72) Erfinder: **Krotky, Peter, Dipl-Ing., Mozartstrasse 11, D-7261 Simmozheim(DE)**

## Beschreibung

Die Erfindung betrifft eine Kurbelwelle für Hubkolbenmaschinen, vorzugsweise Brennkraftmaschinen, mit Lagerzapfen und Hubzapfen, wobei die Hubzapfen von quer zur Kurbelwellenlängsachse verlaufenden, als Wangen ausgebildeten Gegengewichten begrenzt werden, die während der Umdrehung der Kurbelwelle zumindest von einem Luft-Öl-Gemisch in einem Kurbelgehäuse und einer Ölwanne der Brennkraftmaschine umströmt werden.

Bei einer bekannten Kurbelwelle (US-PS 3 088 783) nach der Gattung des Oberbegriffs des Anspruchs 1 sind die - in Drehrichtung Kurbelwelle gesehen - vordere und hintere Begrenzung der Wangen durch gerade Flächen begrenzt, die sich parallel zur Drehachse der Kurbelwelle erstrecken. Beim Betrieb der Kurbelwelle in einer Maschine mit einem Kurbelgehäuse und einer Ölwanne wird insbesondere die vordere Begrenzung wegen ihrer Flächigkeit durch das im Kurbelgehäuse bewegte Luft-Öl-Gemisch und in der Ölwanne vorhandene Öl gehemmt, was zu Leistungsverlusten der Brennkraftmaschine führt. Sinngemäß trifft dies auch für die GB-PS 176 583 zu.

Aufgabe der Erfingung ist es, an Wangen einer Kurbelwelle einer Hubkolbenmaschine solche Vorkehrungen zu treffen, daß Leistungsverluste der Brennkraftmaschine, hervorgerufen durch Strömungswiderstände im Kurbelgehäuse und der Ölwanne, verringert werden.

Erfindungsgemäß wird diese Aufgabe durch die kennzeichnenden Merkmale des Anspruchs 1 oder 4 gelöst. Weitere, die Erfindung ausgestaltende Merkmale sind in den Unteransprüchen 2, 3, 5 und 6 enthalten.

Die mit Erfindung hauptsächlich erzielten Vorteile sind darin zu sehen, daß durch die Ausbildung der Wangen als strömungsgünstige Körper die Verlustleistung der Brennkraftmaschine, gerade wenn diese mit relativ hoher Drehzahl arbeitet, erheblich reduziert wird. Diese Körper an den Wangen durchdringen das Luft-Öl-Gemisch im Kurbelgehäuse und/oder Öl in der Ölwanne auf widerstandsarme Weise.

In der Zeichnung sind Ausführungsbeispiele der Erfindung dargestellt, die nachstehend näher beschrieben werden. Es zeigt

Fig. 1 eine Teilansicht einer Kurbelwelle,
Fig. 2 eine Ansicht in Pfeilrichtung A der Fig. 1,
Fig. 3 einen Schnitt nach der Lini III-III der Fig. 2,
Fig. 4 eine Ansicht entsprechend Fig. 1 mit einer weiteren Ausführungsform,
Fig. 5 eine Ansicht in Pfeilrichtung B der Fig. 4,
Fig. 6 einen Schnitt nach der Linie VI-VI der Fig. 5,
Fig. 7 eine Ansicht entsprechend Fig. 6 mit einer weiteren Ausführungsform.

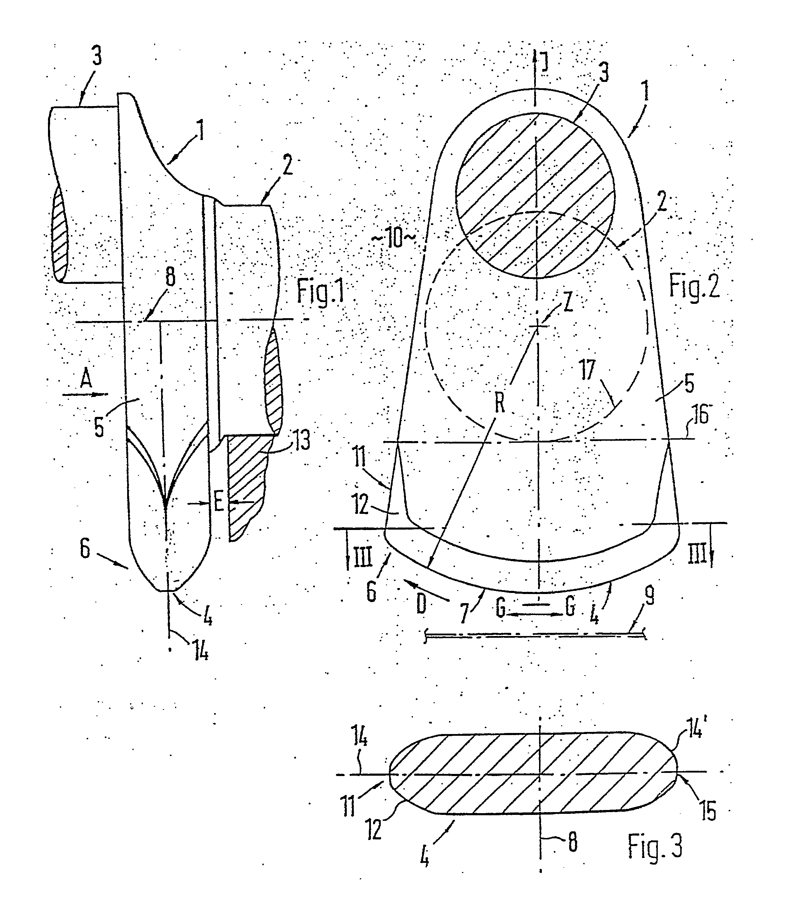

Von einer Hubkolben-Brennkraftmaschine für Kraftfahrzeuge wird lediglich die Kurbelwelle 1 gezeigt. Diese umfasst im dargestellten Bereich einen Lagerzapfen 2 und einen Hubzapfen 3. Der Hubzapfen 3 wird von einer als Gegengewicht 4 ausgebildeten Wange 4 begrenzt. Der Lagerzapfen 2 ist von der Wange 5, die gemäß Fig. 2 eine plattenartige Form aufweist, weggeführt. Nach Fig. 2 erweitert sich die Wange 5 vom Hubzapfen 2 aus bis zu einem entfernt von letzterem liegenden Bereich 6, dessen Begrenzung 7 auf einem Radius R liegt. Das Zentrum Z des Radius' R verläuft koaxial zu einer Längsmittellängsachse 8 der Kurbelwelle 1.

Zur Reduktion der Verlustleistung der Brennkraftmaschine durch Verdrängung von Öl in einer Ölwanne 9 bzw. eines Luft-Öl-Gemisches im Raum 10 eines Kurbelgehäuses ist die Wange 5 im Bereich 6 nach Art eines strömungsgünstigen Körpers ausgebildet. Hierbei weist eine in Drehrichtung D der Kurbelwelle 1 vorneliegende Begrenzung 11 eine in besagte Drehrichtung D weisende Verjüngung 12 auf.

Sofern zwischen Wange 5 und einem lediglich teilweise dargestellten Lagerstuhl 13 des Lagerzapfens 2 ein relativ großer freier Durchgang E (ca. 6 mm) vorgesehen ist, empfiehlt es sich, die Verjüngung 12 symmetrisch zu einer Mittelebene 14 der Wange 3 auszubilden, die quer zur Mittellängsachse 8 der Kurbelwelle 1 verläuft. Die Verjüngung 12 ist parabolisch gestaltet, mit der eine strömungsgünstige Form der Wange 3 erzielt wird. Eine ähnliche Verjüngung 14' ist an der hinteren Begrenzung 15 der Wange 5 angebracht. Anstelle der parabolischen Form besteht auch die Möglichkeit, die Verjüngung keilförmig oder tropfenförmig zu gestalten.

Die Verjüngungen 12, 14' beginnen im Bereich einer Hilfslinie 16, die den Außendurchmesser 17 des Lagerzapfens 2 tangiert. Die Verjüngung 12 ist in radialer Richtung G-G der Wange 5 fortgeführt.

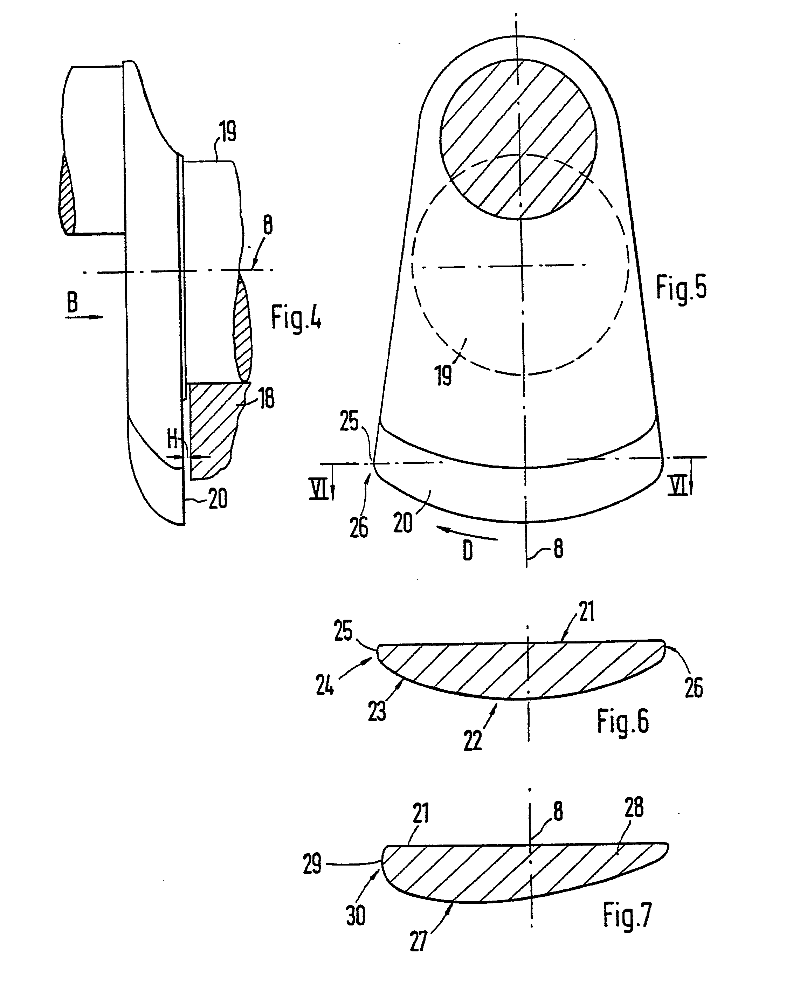

Nach Fig. 4 ist der freie Durchgang H (ca. 2 mm) zwischen dem Lagerstuhl 18 des Lagerzapfens 19 und der Wange 20 relativ klein. Bei dieser Ausführungsform liegt die dem Lagerzapfen 19 zugekehrte erste Seite 21 der Wange 20 auf einer Geraden. Dagegen ist die dem Lagerzapfen 19 abgekehrte zweite Seite 22 mit einer strömungsgünstigen Wölbung 23 versehen, die symmetrisch zur Längsmittelachse 8 der Kurbelwelle 1 ausgebildet ist. Die vorneliegende Begrenzung 24 der Wange 20 weist eine von der Seite 22 weggeführte und in die Kontur der Wölbung 23 übergehende Rundung 25 auf. Die hintere Begrenzung 26 ist sinngemäß gestaltet.

In Fig. 7 verläuft die Wölbung 27 unsymmetrisch zur Längsmittelachse 8 der Kurbelwelle 1, dergestalt, daß die Wange 28 angenähert die Form eines freifliegenden Wassertropfens (Tropfenform) aufweist, dessen Vorderseite 29 die vorneliegende Begrenzung 30 der Wange 28 ist.

## Patentansprüche

1. Kurbelwelle (1) für Hubkolbenmaschinen, vorzugsweise Brennkraftmaschinen, mit Lagerzapfen (2) und Hubzapfen (3), wobei die Hubzapfen von quer zur Kurbelwellenlängsachse verlaufenden, als Wangen (5, 20) ausgebildeten Gegengewichten begrenzt werden, die während der Umdrehung der Kurbelwelle (1) zumindest von einem Luft-Öl-Gemisch in einem Kurbelgehäuse und einer Ölwanne der Hubkolbenmaschine umströmt werden, gekennzeichnet durch folgende Merkmale:
- zur Reduktion der Verlustleistung der Hubkolbenmaschine durch Öl- und/oder Luft-Öl-Gemisch-Verdrängung durch die Wangen (20, 28) sind diese an ihrem entfernt vom Hubzapfen (3) liegenden Bereich nach Art von strömungsgünstigen Körpern ausgestaltet;
- eine in Drehrichtung (D) der Kurbelwelle (1) vorne liegende Begrenzung (11, 24) der Wangen (5, 20) weist eine Verjüngung (12) auf;
- die Verjüngung ist parabolisch geformt und erstreckt sich symmetrisch zu einer Mittellängsebene (14) der Wangen (5).

2. Kurbelwelle nach Anspruch 1, dadurch gekennzeichnet, daß die Verjüngung (12) der Wangen (5) in radialer Richtung (G–G) der Kurbelwelle (1) fortgeführt ist.

3. Kurbelwelle nach den Ansprüchen 1 und 2, dadurch gekennzeichnet, daß die Verjüngung (12) um eine weitere Verjüngung (14') der hinteren Begrenzung (15) im Bereich einer Hilfsebene (16) beginnend den Außendurchmesser (17) des Lagerzapfens (2) tangiert.

4. Kurbelwelle für Hubkolbenmaschinen, vorzugsweise Brennkraftmaschinen mit Lagerzapfen (19) und Hubzapfen (3), wobei die Hubzapfen von quer zur Kurbelwellenlängsachse verlaufenden, als Wangen (5, 20) ausgebildeten Gegengewichten begrenzt werden, die während der Umdrehung der Kurbelwelle zumindest von einem Luft-Öl-Gemisch in einem Kurbelgehäuse und einer Ölwanne der Hubkolbenmaschine umströmt werden, gekennzeichnet durch folgende Merkmale:
- zur Reduktion der Verlustleistung der Hubkolbenmaschine durch Öl- und/oder Luft-Öl-Gemisch-Verdrängung durch die Wangen (5, 20) sind diese an ihrem entfernt vom Hubzapfen (3) liegenden Bereich nach Art von strömungsgünstigen Körpern ausgebildet;
- die dem Lagerzapfen (19) zugekehrte erste Seite (21) der Wange (20) wird von einer Ebene begrenzt, wogegen die dem Lagerzapfen (19) abgekehrte zweite Seite (22) eine strömungsgünstige Wölbung (23) aufweist;
- das in Drehrichtung (D) der Kurbelwelle vorneliegende Teil der Wange (20) ist als Rundung (25) ausgebildet, die in Kontur der Wölbung (23) übergeht.

5. Kurbelwelle nach Anspruch 4, dadurch gekennzeichnet, daß die Wölbung (23) symmetrisch zur Längsmittelachse (8) der Kurbelwelle (1) verläuft.

6. Kurbelwelle nach Anspruch 4, dadurch gekennzeichnet, daß die Wölbung (27) unsymmetrisch zur Längsmittelachse (8) der Kurbelwelle (1) verläuft und derart ausgebildet ist, daß die Wange (28) angenäherte Tropfenform aufweist.

## Claims

1. A crankshaft (1) for reciprocating-piston engines, preferably internal combustion engines, having bearing journals (2) and crank pins (3), the crank pins being bounded by counterweights which extend transversely to the longitudinal axis of the crankshaft and are constructed as side walls (5, 20) and around which flows at least an air-oil mixture in a crankcase and an oil sump of the reciprocating-piston engine during the rotation of the crankshaft (1), characterized by the following features:
- in order to reduce the power loss of the reciprocating-piston engine by oil and/or air-oil displacement through the side walls (20, 28) the latter are constructed as streamlined bodies in their areas remote from the crank pin (3);
- a boundary (11, 24) of the side walls (5, 20) lying towards the front in the direction of rotation (D) of the crankshaft (1) has an inward taper (12);
- the taper is shaped as a parabola and extends symmetrically with respect to a longitudinal median plane (14) of the side walls (5).

2. A crankshaft according to Claim 1, characterized in that the taper (12) of the side walls (5) is continued in the radial direction (G–G) of the crankshaft (1).

3. A crankshaft according to Claims 1 and 2, characterized in that the taper (12) is contiguous with the external diameter (17) of the bearing journal (2) around a further inward taper (14') of the rear boundary (15) starting in the region of an auxiliary plane (16).

4. A crankshaft for reciprocating-piston engines, preferably internal combustion engines, having bearing journals (19) and crank pins (3), the crank pins being bounded by counterweights which extend transversely to the longitudinal axis of the crankshaft and are constructed as side walls (5, 20) and around which flows at least an air-oil mixture in a crankcase and an oil sump of the reciprocating-piston engine during the rotation of the crankshaft, characterized by the following features:
- in order to reduce the powder loss of the reciprocating-piston engine by oil and/or air-oil displacement through the side walls (20, 28) the latter are constructed as streamlined bodies in their areas remote from the crank pin (3);
- the first side (21) of the side wall (20) facing the bearing journal (19) is bounded by one plane, whereas the second side (22) remote from the bearing journal (19) has a streamlined bulge (23);
- the part of the side wall (20) lying towards the front in the direction of rotation (D) of the crankshaft is constructed as a rounded portion (25) which passes into the contour of the bulge (23).

5. A crankshaft according to Claim 4, characterized in that the bulge (23) extends symmetrically with respect to the longitudinal median axis (8) of the crankshaft (1).

6. A crankshaft according to Claim 4, characterized in that the bulge (27) extends asymmetrically with respect to the longitudinal median axis (8) of the crankshaft (1) and is constructed in such a way that the side wall (28) is approximately drop-shaped.

## Revendications

1. Vilebrequin (1) de moteur à pistons alternatifs, de préférence pour moteurs à combustion interne, avec des tourillons de palier (2) et des tourillons de maneton (3), les tourillons de maneton étant délimités par des contrepoids, s'étendant transversalement par rapport à l'axe longitudinal du vilebrequin et réalisés sous la forme de joues (5, 20), qui, pendant la rotation du vilebrequin (1), sont balayés par une circulation d'au moins un mélange air-huile dans un carter de vilebrequin et un carter d'huile du moteur à pistons alternatifs, caractérisé en ce que:

    – en vue d'une réduction de la puissance perdue du moteur à pistons alternatifs par déplacement de l'huile et/ou du mélange air-huile par les joues (20, 28), ces dernières sont réalisées, à leur zone éloignée des tourillons de maneton (3), à la manière de corps favorable à l'écoulement;

    – une délimitation (11, 24) des joues (5, 20), qui est située à l'avant dans le sens de rotation (D) du vilebrequin (1), présente un effilement (12);

    – l'effilement est de forme parabolique et s'étend symétriquement par rapport à un plan longitudinal médian (14) des joues (5).

2. Vilebrequin selon la revendication 1, caractérisé en ce que l'effilement (12) des joues (5) est poursuivi en direction radiale (G–G) du vilebrequin (1).

3. Vilebrequin selon les revendications 1 et 2, caractérisé en ce que l'effilement (12) est tangent au diamètre extérieur (17) du tourillon de palier (2), en constituant un autre effilement (14') de la délimitation arrière (15), en commençant dans la zone d'un plan auxiliaire (16).

4. Vilebrequin (1) de moteur à pistons alternatifs, de préférence pour moteurs à combustion interne, avec des tourillons de palier (19) et des tourillons de maneton (3), les tourillons de maneton étant délimités par des contrepoids, s'étendant transversalement par rapport à l'axe longitudinal du vilebrequin et réalisés sous la forme de joues (5, 20), qui, pendant la rotation du vilebrequin (1), sont balayés par une circulation d'au moins un mélange air-huile dans un carter de vilebrequin et un carter d'huile du moteur à pistons alternatifs, caractérise en ce que:

    – en vue d'une réduction de la puissance perdue du moteur à pistons alternatifs par déplacement de l'huile et/ou du mélange air-huile par les joues (5, 20), ces dernières sont réalisées, à leur zone éloignée des tourillons de maneton (3), à la manière de corps favorables à l'écoulement;

    – la première face (21) de la joue qui est tournée vers le tourillon de palier (19) est délimitée par un plan, par contre, la deuxième face (22) de la joue, qui est opposée au tourillon de palier (19), présente une courbure favorable à l'écoulement;

    – la partie de la joue (20) qui se trouve à l'avant, dans le sens de rotation (D) du vilebrequin, est réalisée sous forme d'arrondi se transformant en le contour de la courbure (23).

5. Vilebrequin selon la revendication 4, caractérisé en ce que l'allure de la courbure (23) est symétrique par rapport à l'axe médian longitudinal (8) du vilebrequin (1).

6. Vilebrequin selon le revendication 4, caractérisé en ce que l'allure de la courbure (27) est asymétrique par rapport à l'axe médian longitudinal (8) du vilebrequin (1) et réalisée de façon que la joue (28) présente à peu près une forme en goutte.

Fig.1

Fig.2

Fig. 3

EP 0 237 718 B1

Fig.4

Fig.5

Fig.6

Fig.7